# EUROPEAN PATENT SPECIFICATION

(11) **EP 2 189 209 B1**
(45) Date of publication and mention of the grant of the patent: **25.05.2011**
(21) Application number: 10151763.9
(22) Date of filing: 27.01.2006
(51) Int. Cl.: B01D 61/12, B01D 61/02, B01D 29/56, C02F 1/44, B01D 35/30

(54) **Encapsulated water treatment system**
Eingekapselte Vorrichtung zur Aufbereitung von Wasser
Système encapsulé de traitement de l'eau

(30) Priority: 27.01.2005 US 647680 P
(43) Date of publication of application: 26.05.2010
(62) Divisional of application: 06734034.9
(73) Proprietor: EcoWater Systems, LLC, Woodbury, MN 55125 (US)
(72) Inventor: Kennedy, Gregory, Maplewood, 55177 (US); Sinkula, David, Coon Rapids, 55433 (US); Zimmermann, Jeffrey, Forest Lake, MN 55025 (US); Khamis, Chaouki, Edina, MN 54424 (US); Stoick, Michael, New Market, MN 55054 (US); Dusheck, Nathan, Hammond, WI 54015 (US)
(74) Representative: Volpert, Marcus

(56) References cited:
- EP-A- 0 509 332
- WO-A-03/091575
- DE-U1- 9 422 466
- JP-U- 62 174 101

## Description

### FIELD OF INVENTION

The present invention relates to water treatment systems and, in particular, to such systems having an encapsulated manifold head and a reverse osmosis cartridge and one or more filter cartridges.

### BACKGROUND OF THE INVENTION

Reverse osmosis systems are known. The main part of the system is a semi-permeable membrane through which the untreated water passes. Such systems typically include an additional carbon or ceramic filter which removes contaminates either prior to passing through the membrane or after. Such systems are often installed in residential applications.

The prior art includes electronic systems which detect when the reverse osmosis membrane requires replacement. Typical prior art systems include measuring the conductivity of the water entering the reverse osmosis cartridge, and then measuring the conductivity of the water at the outlet of the reverse osmosis cartridge. The conductivity of the water is proportional to the total dissolved solids. A ratio of the conductivity levels will provide an indication of the rejection efficiency of the reverse osmosis membrane.

Prior art systems also include an application wherein a permeate pump is included in a factory installation. The permeate pump provides greater efficiency in the system. The permeate pump increases the net pressure across the reverse osmosis membrane by isolating the membrane pressure from the pressure in the products water and thus reducing the permeate back pressure.

The prior art also includes systems which address reducing the spillage of fluid occurring during replacement of the cartridges.

### SUMMARY OF THE INVENTION

It is an object of the present invention to provide an improved locking mechanism for a filter cartridge and manifold head.

It is a further object of the present invention to provide an improved method of monitoring the performance of a reverse osmosis membrane in a drinking water supply system.

It is further object of the present invention to provide a modular manifold head system.

It is an object of the present invention to provide a system for retrofitting a reverse osmosis filter system to include a permeate pump application.

It is an object of the present invention to provide a cartridge which has a reduced inlet opening to reduce spillage during changing of the cartridge.

### BRIEF DESCRIPTION OF THE DRAWINGS

Fig. 1 is a perspective view of a water treatment system with a reverse osmosis cartridge and two filter cartridges.
Fig. 2 is a perspective view of a filter cartridge of Fig. 1.
Fig. 3 is a top view of the filter cartridge of Fig. 2.
Fig. 4 is an exploded view of the filter cartridge of Fig. 2.
Fig. 5 is a bottom perspective view of a manifold head incorporated in the water treatment system of Fig. 1.
Fig. 6 is a block diagram of a reverse osmosis membrane monitoring system.
Fig. 7 is a process flow chart for the system of Fig. 6.
Fig. 8 is a perspective view of a modular manifold head system.
Fig. 9 is top perspective view of a modular manifold head.
Fig. 10 is a schematic diagram of a reverse osmosis water treatment system with a permeate pump.
Fig. 11 is a cross-sectional view of the modular manifold head and cartridges of Fig. 1.
Fig. 12 is a top perspective view of a modular manifold head in a permeate pump application.

### DETAILED DESCRIPTION OF THE INVENTION

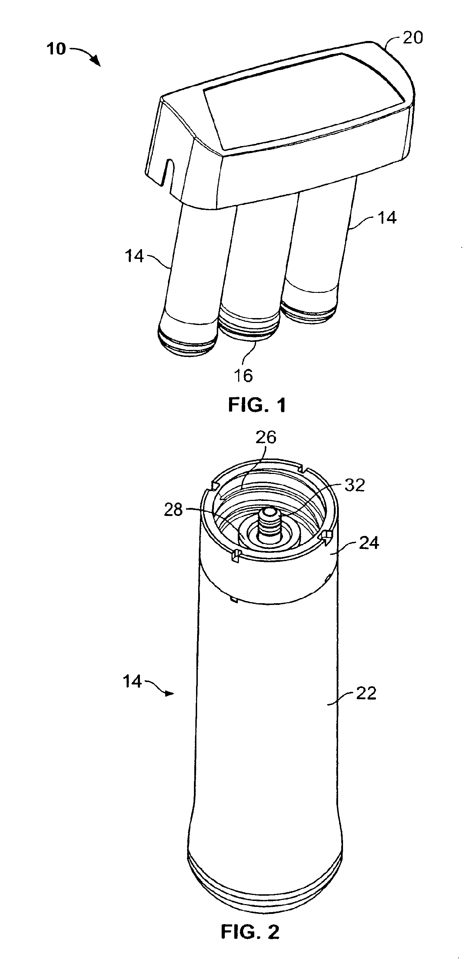

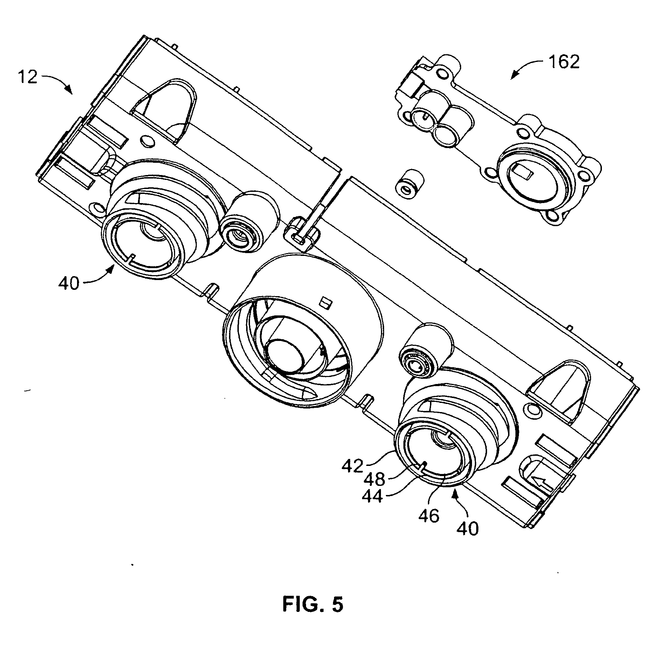

Fig. 1 shows one embodiment of a water treatment system 10 in accordance with the present invention. The system includes a manifold head 12, (see Fig. 5) a first filter cartridge 14, a reverse osmosis cartridge 16 and a second filter cartridge 14. A manifold cover 20 is also shown.

Fig. 2 shows a filter cartridge 14 in accordance with the present invention. The filter cartridge 14 includes a housing 22 having an outer annular collar 24 with a double lead thread 26. An inner annular collar 28 is also shown which includes an O ring 30 to provide a seal. A connection fitting 32 is shown extending through the annular collar 28.

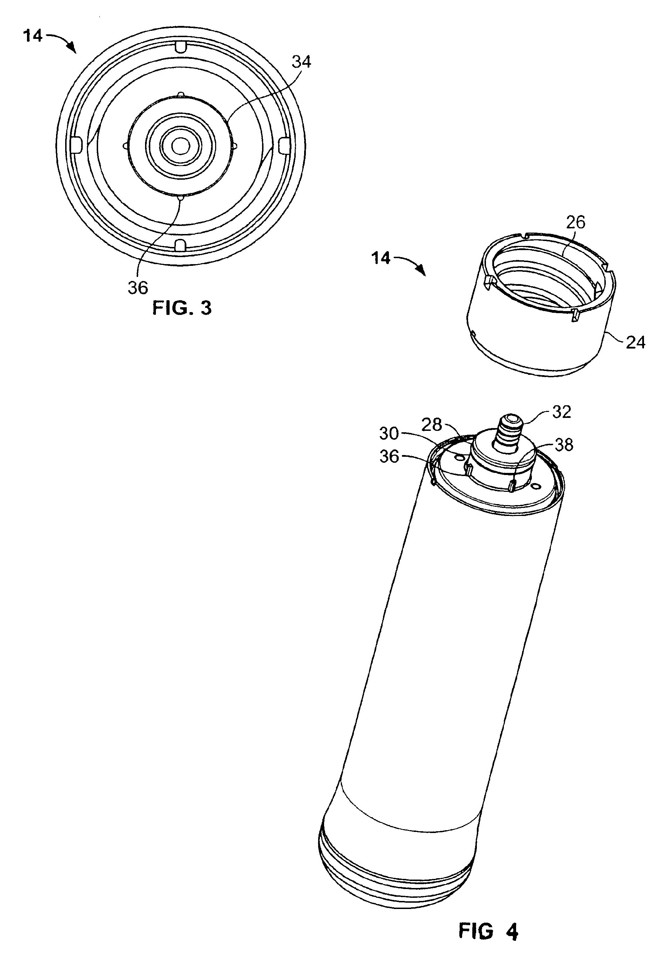

Fig. 3 shows a top view of the filter cartridge 14 and shows the cylindrical wall 34 of the inner annular collar 28, as well as the longitudinal extending bead 36.

Fig. 4 shows the filter cartridge 14 in an exploded view so as to more clearly show the longitudinal extending bead 36. It can be seen that the longitudinal extending bead 36 includes a leading end 38.

Fig. 5 shows the manifold head 12 having the filter cartridge connection fitting 40. The filter cartridge connection fitting 40 includes a threaded outer annular collar 42 and an inner annular collar 44. The inner annular collar 44 having an annular lip 46 and four longitudinal slots 48. The longitudinal slots 48 are equally spaced apart from one another.

It will be appreciated that when the filter cartridge 14 is rotated into a fully secured position onto the connection fitting 40, the filter cartridge 14 comes to rest with the longitudinal extending beads 36 being received by the respective slot 48.

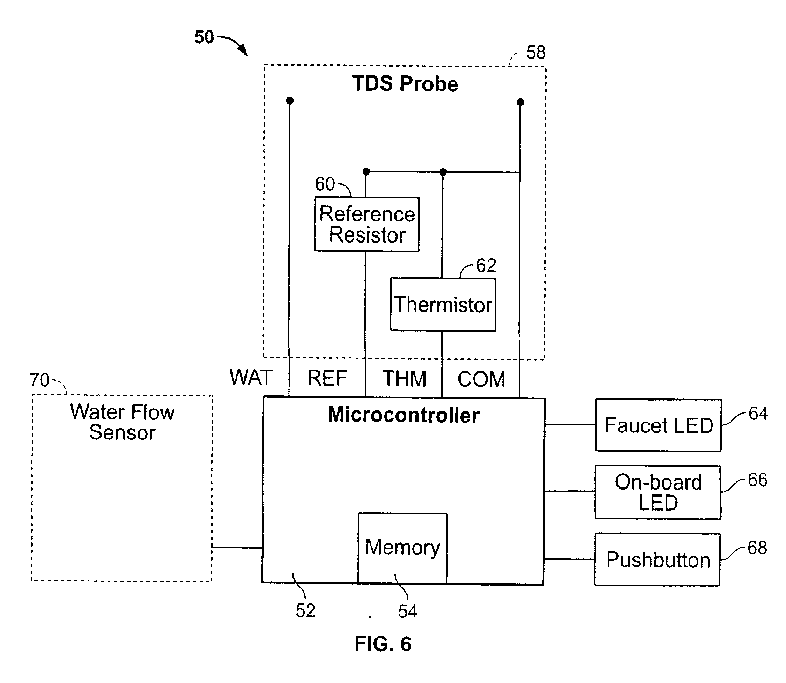

Fig. 6 shows a block diagram of a system 50 for monitoring the performance of a reverse osmosis membrane. The system 50 includes a microcontroller 52 having a memory 54 wherein a program resides. The system 50 includes a single probe set 58 which is located downstream of the reverse osmosis membrane. The probe set 58 includes a reference resistor 60 and a thermal resistor 62. The microcontroller 52 is coupled to a faucet LED 64 for providing an indication to replace the reverse osmosis cartridge. The microcontroller 52 is also coupled to an onboard LED 66 for feedback during operation of an onboard push button 68 also coupled to the microcontroller 52. A water flow sensor 70 is also coupled to the microcontroller 52.

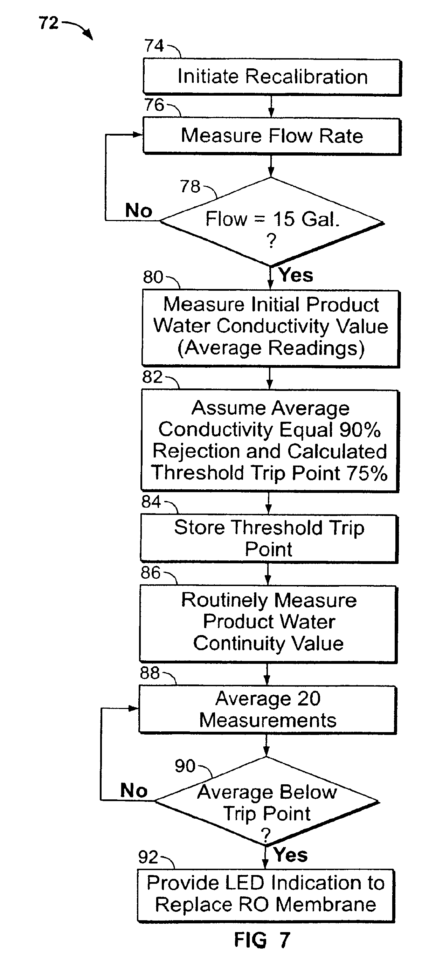

Fig. 7 shows a block diagram 72 which represents the functional steps as executed by the program resident in the memory 54.

Step 74 provides the initiate recalibration routine. The initiate recalibration routine occurs after the reverse osmosis membrane has been replaced and after a power on routine occurs. At step 76, the system measures the flow of water through the system. At step 78, the system determines or detects the flow of fifteen gallons of water through the system. At step 80, the system measures the initial water conductivity downstream of the reverse osmosis membrane. In one embodiment, step 80 the initial product water conductivity value is based on averaging approximately 10-50 water conductivity measurements. At step 82, the product water conductivity value or average conductivity is assumed to equal a 90% rejection. Step 82 then calculates a threshold trip point based on 75% rejection. Step 84 stores the threshold trip point. Step 86 consists of routinely measuring the product water conductivity value. Step 88 consists of averaging the previous twenty measurements of the water conductivity. At Step 90, it is determined whether the average of step 88 is below the threshold trip point of step 84. In the event the average is below the threshold trip point, the system proceeds to step 92 which provides an LED indication to replace the reverse osmosis membrane.

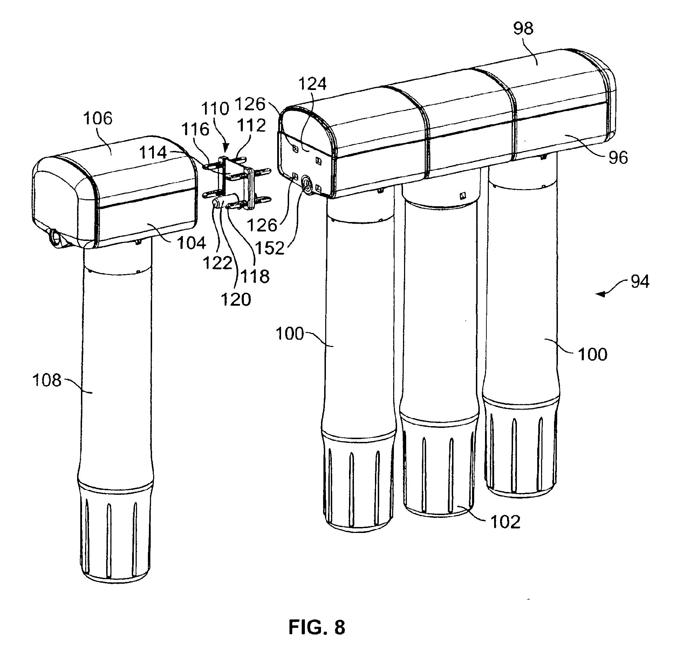

Figure 8 is an embodiment of a modular water treatment system 94. The water treatment system 94 shown in Fig. 8 includes a modular manifold head 96, a manifold cover 98, a first filter cartridge 100, a reverse osmosis cartridge 102 and a second filter cartridge 100. Also shown is a further modular manifold head 104 and cover 106, as well as an additional cartridge unit 108. The system of Fig. 8 provides a modular system wherein additional modular manifold units 104, 106, 108 may be coupled to the water treatment system 94 via a clip 110. The clip 110 includes a plurality of arms 112 extending from a planar body portion 114. Each arm 112 includes a slot 116 and a slanted leading edge 118. The clip 110 also includes a tubular portion 120 extending through the main body portion 114. The tubular portion 120 includes a bore 122 extending throughout the tubular portion 120.

Each manifold 12, 96, 104 includes an end wall 124 having four openings 126.

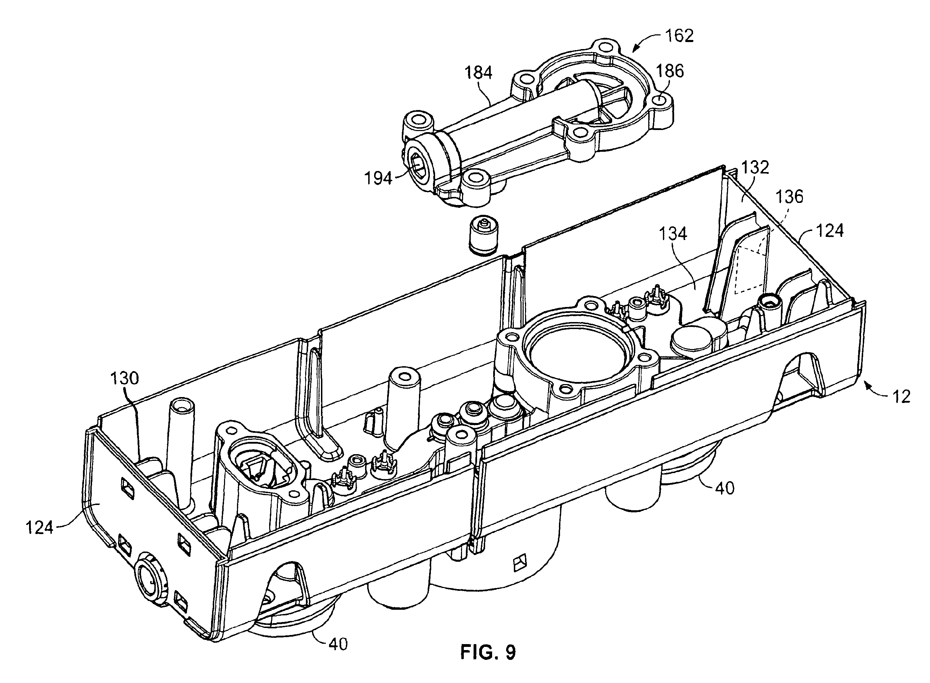

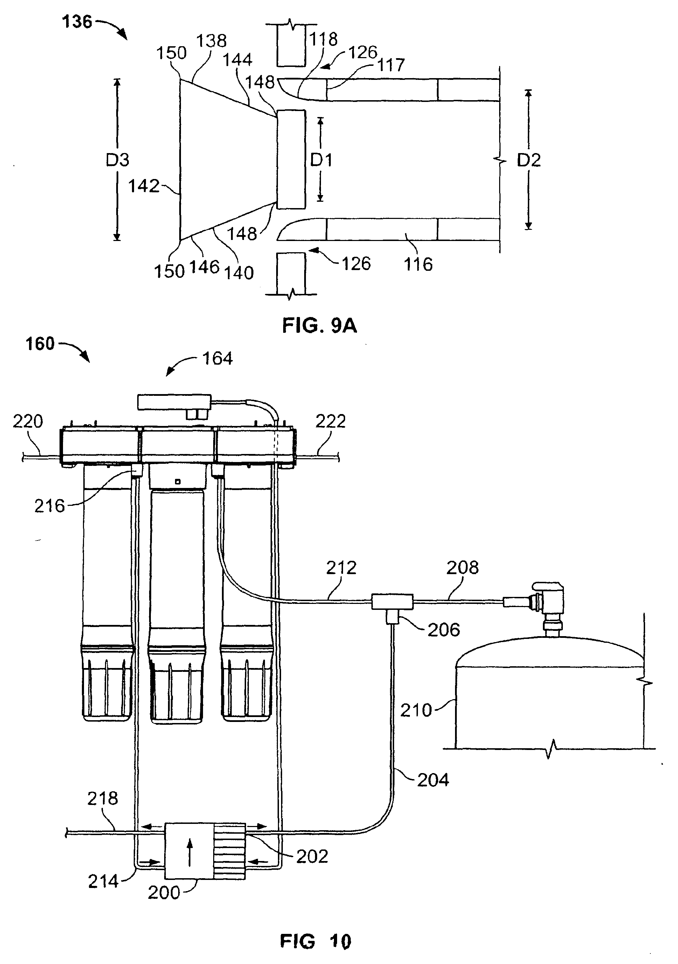

Fig. 9 shows a perspective view of the manifold 12 including the two end walls 124 each having four openings 126. The openings 126 are arranged in pairs, one above the other. For example, lower opening 126 and upper opening 126 comprise one pair. Each pair of openings 126 includes a pair of upright walls 130 in a spaced apart facing relationship. The upright walls 130 are shown extending from the interior surface 132 of the end wall 124 and the lower surface 134 of the manifold head 12. A flange 136 extends from the inner surface 132 of the end wall 124 towards the interior compartment of the manifold head 12. The flange 136 includes an upper ramp 138 and a lower ramp 140. The flange 136 includes a forward edge 142 and first and second side edges 144, 146. The forward edge 142 is generally parallel to the end wall 124. The first side edge 144 and second side edge 146 form the upper ramp and lower ramp 138, 140. The upper ramp 138 and lower ramp 140 diverge from one another in a direction away from the inner interior surface 132 towards the interior compartment of the manifold head 12. One of the four flanges 136 is shown in phantom in Fig. 9. The ramps 138, 140 include a proximal end 148 and a distal end 150. The proximal end 148 is located slightly away from the edge of the opening 126. The distal end 150 is spaced in an interference relationship regarding alignment of the opening 126. Fig. 9A shows additional detail.

With reference to Fig. 8, it will be appreciated that as the clip 110 is inserted into the openings 126 of the manifold head 96 to the right of the figure, the slanted edge 118 of each of the resilient arms 112 will be deflected by the respective ramp 138, 140. Once the clip 110 is fully inserted through the four openings 126, the slot 116 will extend past the distal end 150 and the two arm pairs will clamp about the respective distal end 150 with the edge of the slot 116 coming into locking engagement with the distal end 150 of the ramp 138, 140. Meanwhile, the tubular portion 120 will be received by the tube fitting connector 152 for sealing engagement. The other modular manifold head 104 will be coupled in similar manner.

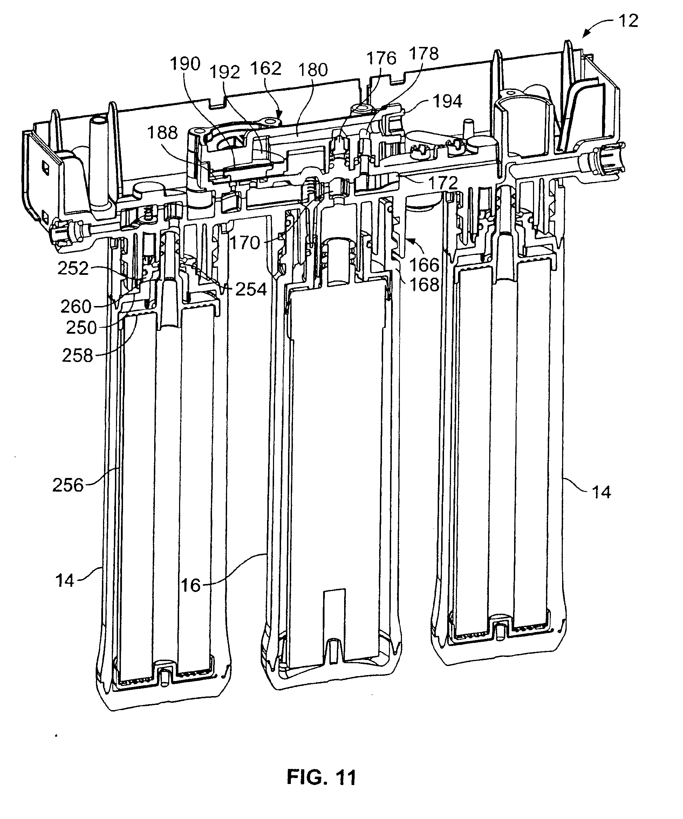

Fig. 10 shows a graphical representation of a water treatment system 160 wherein an automatic shut-off valve cover 162 (see Figs. 5 and 9) may be removed and replaced with another cover 164 adapted to accommodate a permeate pump application. With reference to Fig. 11, a cross-section of a water treatment system is shown including the modular manifold head 12, first cartridge 14, reverse osmosis cartridge 16 and second filter cartridge 14. The manifold head 12 is shown to include a connection fitting 166 for receiving the respective connection fitting 168 of the reverse osmosis cartridge 16. The manifold head 12 includes a first manifold access port 170 for coupling to an output of a reverse osmosis cartridge 16, a second manifold access port 172 coupled to an output of a reverse osmosis stage. A non-permeate pump cover 162 is adapted to seal the first and second access ports 170, 172 for a non-permeate pump application. A permeate pump cover 164 is adapted to also seal the first and second access ports 170, 172 and includes a permeate pump output port 174 which receives a tube fitting connector 175. The permeate pump cover 164 includes a first access and a second access port 176, 178 and a flow channel 180 in communication with the first and second access ports, as well as the permeate pump output port 174. A check valve assembly is located in the first access port 176 for coupling the output of the reverse osmosis cartridge 16. The second cover 164 includes a substantially planer body portion 184 which defines a first end and a second end. Mounting holes 186 are provided for fastening the cover to the manifold head.

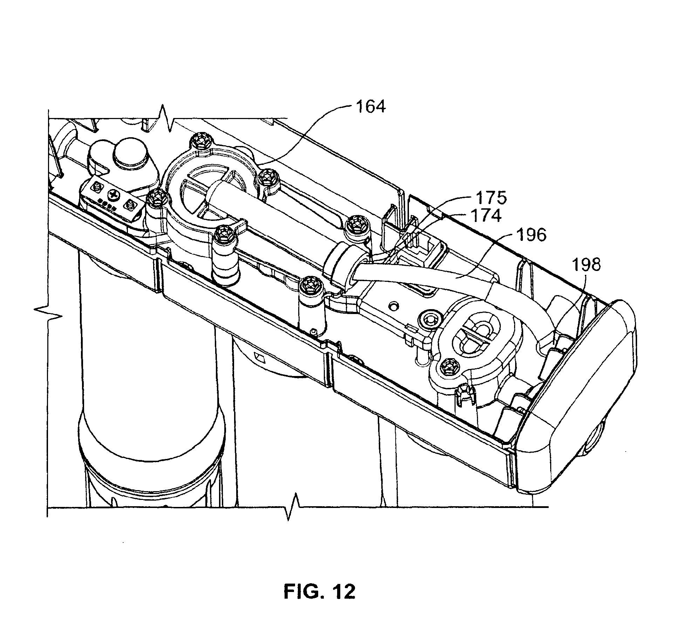

The manifold includes a lower diaphragm receptacle portion 188 having an opened upper portion. The second cover 164 includes an upper diaphragm receptacle portion 190 for mating with the opened upper portion to form a diaphragm cavity which receives a diaphragm. The upper diaphragm receptacle portion 190 includes an opening 192 in fluid communication with the fluid channel 180. The manifold head includes a flow channel coupled to an output port of a pre-filter stage and an input port of the reverse osmosis stage, wherein the flow channel is in fluid communication with the lower diaphragm receptacle portion 188 of the manifold head. It will appreciated that the water treatment system may be assembled at the factory with a non-permeate pump cover 162, wherein the plug 194 is provided at the permeate pump output port 174. A retrofit kit may be provided wherein the first cover 162 is removed and replaced with the second cover 164 having the tube fitting connector 175. A quarter inch tubing 196 may then be coupled to the tube fitting connector 175 and extend through a routing hole 198 as shown in Fig. 12. The tubing 196 extends downward and to a permeate pump 200 as shown in Fig. 10. The permeate pump 200 has a permeate outport 202 having a tubing 204 which runs to a T-connector 206. The T-connector 206 has a further tubing 208 coupled to a storage tank 210, as well a tubing 212 coupled back to the manifold head. The brine side of the permeate pump includes a brine in 214 from the drain flow 216 of the manifold head and a brine out tubing 218 which couples to the drain point. For sake of completeness, the tubing 220 is also shown coming from the supply inlet and tubing 222 is shown going to the faucet.

The installation kit includes at a minimum the second cover 164 and further may include a replacement check valve, as well replacement O rings, tubing, fasteners and installation instructions.

Fig. 11 also shows the filter cartridge 14 having a reduced gap at the connection fitting 32 in order to minimize spillage during changing of the filter cartridge. The novel features of the filter cartridge are explained below. However, it will be apparent that the features can be incorporated into the reverse osmosis cartridge as well.

The filter cartridge 14 includes external cartridge housing 22 having a cylindrical portion with a top portion and a bottom portion. The bottom portion has a closed end. The top portion includes a shoulder 250 having a generally cylindrical neck portion 252 extending upward from the shoulder 250. The cylindrical neck portion 252 defines a portion of a connection fitting. The cylindrical neck portion 252 defines a cylindrical bore having a cylindrical bore wall which defines a first diameter. The cylindrical bore wall includes an annular ring 254 protruding from the wall and defining a second diameter which is smaller than the first diameter. An internal cartridge housing 256 includes a top portion with a shoulder 258, a tube portion 260 extending upward from the internal shoulder 258, and the tube portion 260 defining an outlet bore. The tube portion 260 defines an outer diameter having a third diameter, wherein the third diameter is smaller than the first and second diameter. The tube portion 260 and the annular ring 254 define a cartridge inlet having an annular gap. It will be appreciated that the annular gap is minimized by this design and thereby reduces the likelihood of spillage. The manifold head is adapted to conform with the filter cartridge 14. In particular, the manifold head includes a connection fitting 40 which includes an internal annular collar having a length defined such that when the cartridge 14 is assembled to the manifold, the internal annular collar extends around the tube portion 260 and up to the annular ring, with a minimum spacing for tolerance.

It is thus proposed according to the invention a modular system for coupling water filter manifold heads, the system comprising (as illustrated in Figures 8-9A):
a first and second manifold head 96, 104, each manifold head having a first side 124 and a manifold head cavity, the first side 124 including a pair of ramps 138, 140, each ramp having a first end and a second end, with a ramp edge 144, 146 defined between the first end and second end, the pair of ramps arranged in an opposed and outwardly facing relationship, with the first ends 148 adjacent the first side 124 and the second ends 150 extending away from the first side 124 inward within the manifold head cavity, the first ends 148 of the pair of ramps 138, 140 defining a distance D1, and the second ends 150 of the pair of ramps 138, 140 defining a distance D3, wherein the distance D3 is greater than the distance D1, the pair of ramps 138, 140 each defining, at the second end 150, a locking edge extending in a direction which diverge; and
a clip 110 having a body 114, a first pair of arms 112 extending from the body 114 in a generally first direction, and a second pair of arms 112 extending from the body 114 in a generally opposite direction, each pair of arms 112 having a latch 117 at a distal end, each pair of latches 117 define a distance D2, wherein D1 is less than or equal to D2 which is less than or equal to D3.

It is also proposed according to the invention a locking mechanism for an encapsulated manifold and cartridge, the locking mechanism comprising
an encapsulated manifold 12 having a connection fitting 40, the connection fitting 40 having a threaded outer annular collar 42 and an inner annular collar 44, the inner annular collar 44 having an annular lip 46 and at least one longitudinal slot 48 extending from the lip 46) along a portion of the annular collar 44; and
a cartridge 14 having a connection fitting 32, the connection fitting 32 having a threaded outer annular collar 24 for mating with the threaded outer annular collar 42 of the manifold 12, the connection fitting 32 of the cartridge 14 also having a cylindrical wall 34 located within the threaded outer annular collar 24 of the cartridge 14, the cylindrical wall 34 having at least one longitudinal extending bead 36 which is received by the respective slot 48 upon the cartridge 14 being threadingly fastened to the manifold to a fully secured position.

According to a particular feature, the longitudinal extending bead 36 engages the annular lip 46 approximately 1/8 of a turn prior to the fully secured position.

According to a particular feature, the manifold 12 includes four longitudinal slots 48 extending from the lip 46 along a portion of the annular collar 44 and equally spaced apart circumferentially about the annular collar 44, and the cartridge 14 includes four longitudinal extending beads 36 extending along the cylindrical wall 34, the four longitudinal extending beads 36 are equally spaced about the cylindrical wall 34, each of the longitudinal extending beads 36 is adapted to be received by a respective slot 48 with the cartridge 14 in the fully secured position.

It is also proposed according to the invention an installation kit for replacing an automatic shutoff valve cover previously assembled on a manifold head of a water treatment system, wherein the manifold head includes a first access port adapted to be coupled to an output of a reverse osmosis cartridge, a second access port coupled to an output of the reverse osmosis stage, the kit comprising (as illustrated in figures 10-11):
a cover 164 having a cover first access port 170, a cover second access port 172, and having a permeate pump output port 174 with a tube fitting connector 175 for permeate pump application.

According to a particular feature, the installation kit further comprises a check valve assembly adapted to be received in the cover first access port 170.

According to a particular feature, the cover includes a substantially planar body portion having a fluid channel which extends longitudinally within the planar body portion, wherein one end of the body portion includes the permeate pump output port with the tube fitting connector, the cover second access port adjacent the tube fitting connector and the cover first access port is adjacent the cover second access port on a side opposite from the tube fitting connector.

According to a particular feature, the installation kit further comprises replacement 0-rings for the cover first and second access ports 176, 178.

## Claims

1. A modular system for coupling water filter manifold heads, the system comprising:
a first and second manifold head (96, 104), each manifold head having a first side (124) and a manifold head cavity, the first side (124) including a pair of ramps (138, 140), each ramp having a first end (148) and a second end (150), with a respective ramp edge (144, 146) defined between the first end (148) and second end (150), the pair of ramps arranged in an opposed and outwardly facing relationship, with the first ends (148) adjacent the first side (124) and the second ends (150) extending away from the first side (124) inward within the manifold head cavity, the first ends (148) of the pair of ramps (138, 140) defining a distance D1, and the second ends (150) of the pair of ramps (138, 140) defining a distance D3, wherein the distance D3 is greater than the distance D1, the pair of ramps (138, 140) each defining, at the second end (150), a locking edge extending in a direction which diverge; and
a clip (110) having a body (114), a first pair of arms (112) extending from the body (114) in a generally first direction, and a second pair of arms (112) extending from the body (114) in a generally opposite direction, each pair of arms (112) having a latch (117) at a distal end, each pair of latches (117) define a distance D2, wherein D1 is less than or equal to D2 which is less than or equal to D3.

2. The system of claim 1, wherein each pair of ramps (138, 140) is defined by a flange (136) extending from the first side (124) inward within the cavity, each flange (136) defining a forward edge (142) and first and second side edges (144, 146), wherein the forward edge (142) is generally parallel to the first side (124) and the first and second side edges (144, 146) diverge from one another in the direction away from the first side (124) and inward within the cavity.

3. The system of claim 2, wherein each pair of ramps (138, 140) include an upper ramp and a lower ramp, the first side (124) of each manifold includes a manifold wall, the wall having an upper opening (126) adjacent each upper ramp (138), the upper opening (126) having a lower edge and an upper edge, the lower edge generally aligned with the first end of the upper ramp (138), and the upper edge extends above the second end of the upper ramp (138), the wall having an lower opening (126) adjacent each lower ramp (140), the lower opening (126) having a lower edge and an upper edge, the upper edge generally aligned with the first end of the lower ramp (140), and the lower edge extends below the second end of the lower ramp (140).

4. The system of claim 3, wherein each arm (112) has a thickness with a dimension, and the upper edge extends beyond the second end of the ramp by at least the thickness dimension.

5. The system of claim 1, wherein the body (114) of the clip (110) has a planar shape.

6. The system of claim 1, wherein the arms (112) of the clip (110) include a slot which defines the latch (117), the distal end of each arm has a slanted face (118) to mate with the respective ramp (138, 140), and the arms (112) are made of a resilient material.

7. The system of claim 1, wherein the first side of the first and second manifold heads (96, 104) includes a tube fitting, and the body (114) of the clip (110) includes a tube portion (120) having a first end and a second end, wherein the first end of the tube portion (120) couples to the tube fitting of the first manifold head (96), and the second end of the tube portion (120) couples to the tube fitting of the second manifold head (104).

8. The system of claim 1, wherein each of the first and second manifold heads (96, 104) includes a first pair of ramps (138, 140) and a second pair of ramps (138, 140), and the clip (110) includes a first pair of arms (112) and a second pair of arms (112).

## Patentansprüche

1. Modulsystem zur Kopplung von Wasserfilter-Verteilerköpfen, umfassend einen ersten und zweiten Verteilerkopf (96, 104), die jede eine erste Seite (124) und einen Verteilerkopf-Hohlraum aufweisen, wobei die erste Seite (124) mit einem Paar Rampen (138, 140) versehen ist, die jede ein erstes Ende (148) und ein zweites Ende (150) besitzen und einen entsprechenden Rampenrand (144, 146), der zwischen dem ersten Ende (148) und dem zweiten Ende (150) ausgebildet ist, wobei des weiteren die Rampen des Paares entgegengesetzt zueinander und nach außen weisend angeordnet sind, die ersten Enden (148) neben der ersten Seite (124) liegen und die zweiten Enden (150) sich von der ersten Seite (124) innen in dem Verteilerhohlraum weg erstrecken, wobei ferner die ersten Enden (148) des Rampenpaares (138, 140) einen Abstand D1 bilden, und die zweiten Enden (150) des Rampenpaares (138, 140) einen Abstand D3 bilden, wobei der Abstand D3 größer ist als der Abstand D1 und jede Rampe des Rampenpaares (138, 140) an dem zweiten Ende (150) eine Verriegelungskante aufweist, die sich in auseinanderstrebenden Richtungen erstrecken; und mit einem Halter (110), der einen Körper (114) aufweist, ein erstes Paar Arme (112), die sich von dem Körper (114) in einer im allgemeinen ersten Richtung weg erstrecken, und ein zweites Paar Arme (112), die sich von dem Körper (114) in einer in etwa entgegengesetzten Richtung weg erstrecken, wobei jedes Paar Arme (112) von einem entfernten Ende einen Riegel (117) aufweist und jedes Paar Riegel (117) einen Abstand D2 bildet, wobei D1 kleiner als oder gleich D2 ist und D2 wiederum kleiner als oder gleich D3.

2. System nach Anspruch 1, **dadurch gekennzeichnet, daß** jedes Paar Rampen (138, 140) durch einen Flansch (136) begrenzt wird, der sich von der ersten Seite (124) in dem Hohlraum erstreckt, und jeder Flansch (136) eine Vorderkante (142) sowie erste und zweite Seitenkanten (144, 146) aufweist, wobei die Vorderkante (142) sich in etwa parallel zu der ersten Seite (124) erstreckt und die ersten und zweiten Seitenkanten (144, 146) auseinanderlaufen, und zwar in Richtung von der ersten Seite (124) weg und im Inneren des Hohlraums.

3. System nach Anspruch 2, **dadurch gekennzeichnet, daß** jedes Paar Rampen (138, 140) eine obere und eine untere Rampe aufweist, daß die erste Seite (124) jedes Verteiler mit einer Verteilerwand versehen ist, die eine obere Öffnung (126) neben jeder oberen Rampe (138) besitzt, wobei die obere Öffnung (126) einen unteren Rand und einen oberen Rand aufweist, der untere Rand im allgemeinen zu dem ersten Ende der oberen Rampe (138) ausgerichtet ist, und der obere Rand sich über das zweite Ende der oberen Rampe (131) erstreckt, daß des weiteren die Wand mit einer unteren Öffnung (126) neben jeder unteren Rampe (140) versehen ist, wobei diese untere Öffnung (126) einen unteren Rand und einen oberen Rand aufweist und der obere Rand im allgemeinen mit dem ersten Ende der unteren Rampe (140) ausgerichtet ist, und daß der untere Rand sich unter dem zweiten Ende der unteren Rampe (140) erstreckt.

4. System nach Anspruch 3, **dadurch gekennzeichnet, daß** jeder Arm (112) eine Dickenabmessung aufweist, und daß der obere Rand sich über das zweite Ende der Rampe um wenigstens die Dickenabmessung hinaus erstreckt.

5. System nach Anspruch 1, **dadurch gekennzeichnet, daß** der Körper (114) des Halters (110) planar geformt ist.

6. System nach Anspruch 1, **dadurch gekennzeichnet, daß** die Arme (112) des Halters (110) einen Schlitz aufweisen, der den Riegel (117) bildet, daß das entfernte Ende jedes Arms eine abgeschrägte Fläche (118) besitzt, die mit der entsprechenden Rampe (138, 140) in Berührung steht, und daß die Arme (112) aus einem federnden Material bestehen.

7. System nach Anspruch 1, **dadurch gekennzeichnet, daß** die erste Seite der ersten und zweiten Verteilerköpfe (96, 104) einen Rohrfitting hat, und daß der Körper (114) des Halters (110) mit einem Rohrteil (120) mit einem ersten und einem zweiten Ende versehen ist, wobei das erste Ende des Rohrteils (120) mit dem Rohrfitting des ersten Verteilerkopfes (96) gekoppelt ist, und das zweite Ende des Rohrteils (120) mit dem Rohrfitting des zweiten Verteilerkopfes (104) gekoppelt ist.

8. System nach Anspruch 1, **dadurch gekennzeichnet, daß** jeder erste und zweite Verteilerkopf (96, 104) ein erste Paar Rampen (138, 140) und ein zweites Paar Rampen (138, 140) aufweist, und daß der Halter (110) mit einem ersten Paar Arme (112) und einem zweiten Paar Arme (112) versehen ist.

## Revendications

1. Système modulaire pour coupler des têtes de collecteurs de filtres à eau, le système comprenant :
une première et une seconde tête de collecteur (96, 104), chaque tête de collecteur ayant un premier côté (124) et une cavité de tête de collecteur, le premier côté (124) incluant une paire de rampes (138, 140), chaque rampe ayant une première extrémité (148) et une seconde extrémité (150) avec un bord de rampe respectif (144, 146) défini entre la première extrémité (148) et la seconde extrémité (150), la paire de rampes étant agencées dans une relation opposée et tournées vers l'extérieur, avec les premières extrémités (148) adjacentes au premier côté (124) et les secondes extrémités (150) s'étendant en éloignement depuis le premier côté (124) à l'intérieur dans la cavité de tête de collecteur, les premières extrémités (148) de la paire de rampes (138, 140) définissant une distance D1, et les secondes extrémités (150) de la paire de rampes (138, 140) définissant une distance D3, dans lequel la distance D3 est supérieure à la distance D1, la paire de rampes (138, 140) définissant chacune, à la seconde extrémité (150), un bord de blocage s'étendant dans une direction qui diverge ; et
une pince (110) ayant un corps (114), une première paire de bras (112) s'étendant depuis le corps (114) généralement dans une première direction, et une seconde paire de bras (112) s'étendant depuis le corps (114) dans une direction généralement opposée, chaque paire de bras (112) ayant un verrou (117) à une extrémité distale, chaque paire de verrous (117) définissant une distance D2, telle que D1 est inférieure ou égale à D2, laquelle est inférieure ou égale à D3.

2. Système selon la revendication 1, dans lequel chaque paire de rampes (138, 140) est définie par une bride (136) qui s'étend depuis le premier côté (124) à l'intérieur dans la cavité, chaque bride (136) définissant un bord avant (142) et un premier et un second bords latéraux (144, 146), tels que le bord avant (142) est généralement parallèle au premier côté (124), et le premier et le second bords latéraux (144, 146) divergent l'un par rapport à l'autre dans la direction qui s'éloigne du premier côté (124) et vers l'intérieur dans la cavité.

3. Système selon la revendication 2, dans lequel chaque paire de rampes (138, 140) inclut une rampe supérieure et une rampe inférieure, le premier côté (124) de chaque collecteur inclut une paroi de collecteur, la paroi ayant une ouverture supérieure (126) adjacente à chaque rampe supérieure (138), l'ouverture supérieure (126) ayant un bord inférieur et un bord supérieur, le bord inférieur étant généralement aligné avec la première extrémité de la rampe supérieure (138), et le bord supérieur s'étendant au-dessus de la seconde extrémité de la rampe supérieure (138), la paroi ayant une ouverture inférieure (126) adjacente à chaque rampe inférieure (140), l'ouverture inférieure (126) ayant un bord inférieur et un bord supérieur, le bord supérieur étant généralement aligné avec la première extrémité de la rampe inférieure (140), et le bord inférieur s'étendant au-dessous de la seconde extrémité de la rampe inférieure (140).

4. Système selon la revendication 3, dans lequel chaque bras (112) présente une épaisseur avec une dimension, et le bord supérieur s'étend au-delà de la seconde extrémité de la rampe à raison d'au moins la dimension en épaisseur.

5. Système selon la revendication 1, dans lequel le corps (114) de la pince (110) a une forme plane.

6. Système selon la revendication 1, dans lequel les bras (112) de la pince (110) incluent une fente qui définit le verrou (117), l'extrémité distale de chaque bras présente une face en oblique (118) destinée à s'accoupler avec la rampe respective (138, 140), et les bras (112) sont réalisés en un matériau élastique.

7. Système selon la revendication 1, dans lequel le premier côté de la première et de la seconde tête de collecteur (96, 140) inclut un raccord de tube, et le corps (114) de la pince (110) inclut une portion de tube (120) ayant une première extrémité et une seconde extrémité, dans lequel la première extrémité de la portion de tube (120) est accouplée au raccord de tube de la première tête de collecteur (96), et la seconde extrémité de la portion de tube (120) est accouplée au raccord de tube de la seconde tête de collecteur (104).

8. Système selon la revendication 1, dans lequel chacune de la première et de la seconde tête de collecteur (96, 104) inclut une première paire de rampes (138, 140) et une seconde paire de rampes (138, 140), et la pince (110) inclut une première paire de bras (112) et une seconde paire de bras (112).
